# EUROPEAN PATENT APPLICATION

(11) **EP 0 791 506 A2**
(43) Date of publication of application: **27.08.1997**
(21) Application number: 97301008.5
(22) Date of filing: 17.02.1997
(51) Int. Cl.: B60R 16/02

(54) **Multiplexed electrical system having a central controller and programmable control nodes**

(30) Priority: 21.02.1996 US 604390
(71) Applicant: Consolidated Technologies International, Hilliard, Ohio 43026 (US)
(72) Inventor: Kasa, Zoltan, Worthington, State of Ohio (US); Antle, Jerry J., Sunbury, State of Ohio (US)
(74) Representative: Baillie, Iain Cameron

(57) **Abstract**

An electrical system comprising a central controller multiplexed with highly intelligent nodes which are programmed with predetermined sets of instructions that are necessary to operate the loads attached to the highly intelligent nodes. The central controller may issue high level commands across a serial data communications bus to highly intelligent nodes to trigger execution of the predetermined sets of instructions programmed into the highly intelligent nodes which in turn operate the loads of the electrical system.

## Description

The present invention relates to multiplexed electrical systems and more particularly to an automotive electrical system having highly intelligent multiplexed load dedicated controllers.

Technology advancement has not significantly improved basic vehicle power systems since the mid-1950's when the automotive industry converted from six volt systems to 12 volts. However, there has been an endless succession of new features incorporated into vehicles driven by availability, user demand, competitive pressures and numerous regulatory requirements. These features include comfort and convenience devices, safety enhancements, entertainment sources, navigation and communication devices, engine and transmission management, on-board diagnostic circuits and lighting and annunciation systems unique to mission performance, e.g., emergency vehicle lights and audible alarms. Newly developed vehicle features additionally include active suspension adjustments, intelligent cruise control, collision avoidance systems and automatic emission re-configuration controls.

The number of user-demanded features, as well as those which are mandated by regulatory agencies, is expected to continue to increase leaving manufacturers confronted with the problem of how to accommodate a vehicle's growing complexity. Today, even without all of the available options, the average passenger vehicle wiring harness totals over a mile in length, weighs in excess of 60 pounds and terminates in over 500 connections. Relays, switches, wiring splices, fuses, and other ancillary components are countless. Manufacturing issues include vehicular weight, spatial limitations, style, packaging considerations and the ability to readily incorporate or delete optional features. Perhaps even more important are issues regarding the necessity for proper system integration and information sharing among the vehicle's sub-systems. Because additional features produce significantly increased demand on a vehicle's limited-capacity electrical system, efficient power management becomes a priority concern. In addition to effective power management, a vehicle's design must also take into account system quality, reliability, maintainability and cost.

Presently, conventional on-board electrical and electronic components or loads rely on wiring harnesses and point to point wiring which requires wires running from a central control station directly to each individual load. A load may be a sensor, actuator or other electrical component. The central control system is required to control each and every load in the electrical system and must be extremely complex to accommodate the logic required to control all the loads. For example, in a point to point wiring system, a turn signal lighting system would have a wire running from a battery through a central control (the switch), through a mechanical relay to the turn signal light. Each additional load in the vehicle system must have access to power (i.e. battery) and to a controlling mechanism such as a switch through wires running between the power, switch and load. Each of these wires may be several feet in length and, when one considers the high number of loads, the total length of wire in a vehicle may exceed a mile in length. Today, the average vehicle wiring harness may total over a mile in length and weigh in excess of 60 pounds and terminate in over 500 connectors. Attached relays, switches, splices, fuses and other ancillary components and loads are countless. Additionally, each of these wires must be thick to avoid loss of power across the length of the wire. The resulting weight, material and manufacturing costs of the wiring harnesses which incorporate all of the wiring needed for a vehicle can be extremely high. Manufacturing and design problems for these wiring harnesses include limited space, style and packaging considerations, and limited flexibility for the addition or deletion of features. The central control systems in such systems must be designed for and programmed with all functional algorithms which are necessary to operate all loads of the electrical system. As vehicles become more complex with added features the electrical systems must become increasingly complex to accommodate such added features with the central control design becoming increasingly complex, as well.

Serial data communications or multiplexed systems are being studied for their potential use in automotive electrical systems. In contrast to a point to point wiring system, a multiplexed electrical system can significantly reduce material cost, weight and manufacturing cost by replacing the conventional complex wiring harness and central control with a serial communications bus and multiplexed node controllers. One form of multiplexed electrical system uses a data bus to transmit commands initiated by a central control to remote nodes in communication with the bus. Each node in turn controls several loads directly by the switching of power to the loads in response to the commands received from the central control via the bus.

A serial data communications bus may be comprised of only two wires which loop through the vehicle to each multiplexed node controller. Each node controller is then connected to a power source independently and controls the attached loads by switching power to the loads in response to the commands received from a central control via the bus. Alternatively, the bus may comprise four wires which loop through the vehicle to each node. Two of the wires transmit the commands while the remaining two carry power from the battery to each node controller. In a multiplexing electrical system the central control no longer serves as the switch which transfers the power to and from the load. Rather, the central control utilizes the bus to communicate commands to remote nodes which in turn operate the attached load by switching the power in response to the commands.

One form of presently available multiplexed electrical systems require serial data communications buses to carry all low level commands from a central control to all remote nodes. Each command is communicated to each and every node and therefore complex addressing systems are generally required to arbitrate conflicts between messages and to permit each node to recognize whether a command is to be executed by that respective receiving node. These multiplexed vehicle designs having a central control design, the central control stores all functional algorithms necessary to all operations to be performed by all loads. The remote nodes remain ignorant of the functions being carried out by their attached loads and generally act merely to respond to commands to switch power to a load. Additionally, depending upon the system configuration, the remote nodes may also serve to relay the status or data from the attached sensors when requested by the central control.

In conventional multiplexed electrical systems a single central control is responsible for issuing all low level commands. For example, to cause a turn signal to blink, the central control must issue a low level command telling the remote node to switch power to the turn signal, then the central control must wait a designated period of time and issue another low level command telling the remote node to switch power from the turn signal, and then wait another designated period of time to issue a successive command to switch power to the turn signal, etc. The central control continues to issue these low level commands through the communications bus until it is instructed or otherwise determines when to cease the turn signal operation. The central control is programmed with all functional algorithms which dictate the issuance of all low level commands necessary to operate each of the loads of the electrical system. Because the central control may be simultaneously controlling several loads at any given time through the issuance of low level commands the data traffic on the bus can be extremely high. In addition to the presence of command traffic on the bus, the remote nodes may be simultaneously introducing sensor related data messages onto the bus which contain information indicative of sensor condition. These commands and messages may conflict with one another or others issued by the central control or other remote nodes on the bus, and thus cause erroneous commands, bus errors or even a lock-up of the bus. To combat these potential conflicts on the bus, highly complicated message arbitration systems have arisen to address these high traffic problems on the bus. Despite the best efforts of these arbitration scheme designers, the high traffic carried by multiplex buses still often cause failures and lock-ups arising from conflicts on the bus. These arbitration systems are also programmed into and are executed by the central control thus adding to the already existing complexity of the central control.

Another form of multiplexed electrical system may utilize a distributed network of multiplexed node controllers which communicate with each other via a high speed data bus. The distributed multiplexed node controllers share control over the entire vehicle electrical system. Each distributed controller retains their own local processing and power switching control over attached loads by utilizing the information shared across the network with the other nodes. The distributed network controller scheme permits designers to remove power switching command control from a central controller and locate it throughout a distributed network of controllers which have nodes located close to loads that would be geographically remote from a central controller and therefore reduce the amount of control wiring

It is also the case in some distributed node electrical systems that one node controller may be designated a master controller. The master controller would control the traffic across the data communication bus and may control the entire vehicle electrical system by sending commands across the bus to the other node controllers. In this topology the master controller is typically programmed with all functional algorithms necessary to control the entire electrical system. As an example, a distributed network system may have a dashboard node, an engine node, a left front node, etc., where each node is distributed based on geographic location or functionality. The dashboard node may be designated the master controller and control the entire vehicle electrical system.

Even in a distributed network scheme, however, the data bus that carries messages between the distributed network of nodes must also carry a significant amount of data. To operate properly each node must communicate and co-ordinate its actions with the other nodes. To more thoroughly describe the operation of a distributed node network system the previous example of the operation of a turn signal will be employed. For example, the network may have a dashboard node which may send a command across the data bus addressed to a left front node that tells the node to switch power to the left front turn signal. The left front node recognizes the address and executes the command by switching power to the left front signal. The dashboard node may then send a command addressed to the left front node telling that node to switch power away from the left front signal. This series will repeat until the dashboard node determines that it should cease operation of the left front turn signal. The dashboard node may contain the clock necessary to time the sequence of the further commands. It is also feasible that the clock may be located in a third network node and may send clock signals periodically across the bus to allow for timing of commands across the bus. The operation just described results in a high amount of traffic across the bus to the distributed nodes. Each node must interpret each command traveling across the bus to determine which commands are addressed to the respective receiving node. As before, the presence of high data traffic yields the same problem previously identified, that is using a complex conflict arbitration schemes to avoid lock-ups and other errors on the data bus.

In contrast to the previously discussed multiplexing systems, the present invention is directed toward a network of multiplexed highly intelligent nodes controlling an electrical system. These highly intelligent nodes contain all necessary processing power and are programmed with the functional algorithms required to control the loads that are connected to each respective highly intelligent node. The programming of each node with the functional algorithms necessary to operate the loads that node is responsible for permits each node to autonomously control the switching of power to those loads. In this process, the information provided by the sensors is used locally, resulting in a "closed loop", autonomous control. The programmed node no longer needs to receive low level commands from the bus directing each individual power switch operation. Therefore, communication between the nodes is limited to high level commands such as "start" (procedure) and "stop" (procedure) and "report" (status) of the implemented procedure rather than the conventional low level commands.

As a result of using highly intelligent nodes, central controllers may be simplified because they will no longer need to be programmed with all functional algorithms necessary to operate each electrical system load. Rather, each node is programmed with the functional algorithms required to operate the loads attached to that node.

The highly intelligent nodes may be packaged to be modular in nature and identical in design. Intelligent nodes may be manufactured and programmed with the functional algorithms necessary to control loads identified with a feature. Once programmed the node may become identified with the features for which it is programmed. To add a feature to a vehicle, one merely ties a highly intelligent node which has been identified as being programmed for the desired feature into the data bus giving the system a "plug and play" capability. All loads necessary for the desired feature may then be installed in the conventional manner and may then be connected to the newly installed highly intelligent node. One will not need to redesign the wiring harness or splice into an existing wiring harness nor be required to reprogram and rewire an existing multiplexed electrical system. Likewise, a feature or option may be simply removed from an electrical system by merely disconnecting the respective highly intelligent node from the multiplexed bus.

The present invention will also lead to significantly reduce the amount of data traffic carried on multiplexed network buses and thereby avoid elaborate and expensive message arbitration schemes. The serial data communications bus has a highly reduced level of traffic in comparison to conventional multiplexed electrical systems because the bus may only need to carry high level commands between networked nodes and a central control. This reduced level of traffic on the bus may also increase the capacity of an electrical system to control loads.

These and other advantages of the present invention will become obvious to one skilled in the art after a review of the following detailed description.
Figure 1 is a block diagram of a conventional vehicle electrical system of the prior art;
Figure 2 is a block diagram of a vehicle electrical system of the prior art having a distributed network of multiplexed nodes;
Figure 3 is a block diagram of a vehicle electrical system of the prior art having a multiplexed network with a master controller and several simple nodes;
Figure 4 is a block diagram of one embodiment of the present invention having a multiplexed network with a master controller and several highly intelligent nodes;
Figure 5 is a timing diagram for control of emergency vehicle lighting in a normal mode using the claimed invention; and
Figure 6 is a timing diagram for control of emergency vehicle lighting in a dimmed mode using the claimed invention.

It should be appreciated that while the following description describes an automotive electrical system that the present invention may be utilized anywhere a multiplexed electrical system may be of service.

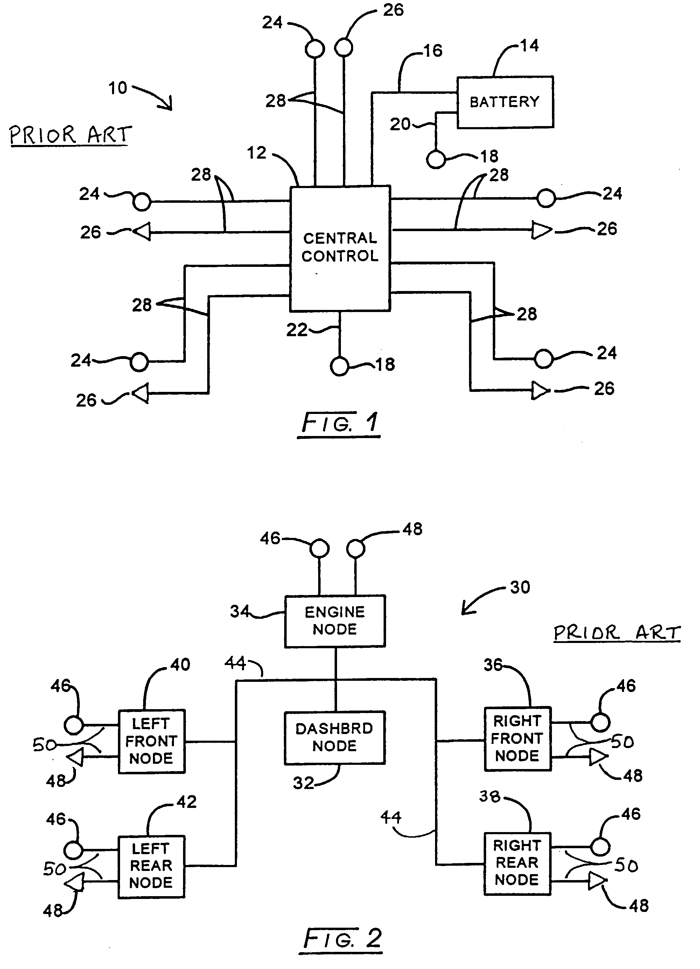

Referring to Figure 1, a conventional, non-multiplexed vehicle electrical system using point to point wiring scheme is shown at 10. This electrical system includes a central control 12 which is connected to a power source 14 via a power line 16. The power source 14 provides voltage offset from the vehicle ground 18 via ground line 20. The central control 12 is also connected to ground 18 with its own ground line 22. Sensors 24, such as temperature and pressure sensors, and actuators 26, such as switches, relays and motors, are distributed throughout the vehicle and are directly controlled by the central control 12 through control wiring 28. The central control 12 switches power to the sensors 24 and actuators 26 through the control wiring 28. The central control 12 is designed and programmed with all necessary functional algorithms to exercise control over the entire vehicle electrical system.

Referring now to Figure 2, a conventional multiplexed distributed node vehicle electrical system of the prior art is shown generally at 30. The system has a set of distributed nodes 32, 34, 36, 38, 40 and 42, located throughout a vehicle chassis (not shown). In this example, the system 30 includes a dashboard node 32, an engine node 34, a right front node 36, a right rear node 38, a left front node 40, and a left rear node 42. The nodes, 32, 34, 36, 38, 40 and 42, communicate with each other via a serial data communications bus 44. Each node polls the status of sensors as at 46 and switches power to actuators 48 via control wiring 50. A power source (not shown) provides power to each node either directly or through the communications bus 44. There is no central controller in the conventional multiplexed vehicle electrical system 30. Rather, control is distributed throughout the network of nodes 32, 34, 36, 38, 40 and 42, with each in communication with the others via data bus 44.

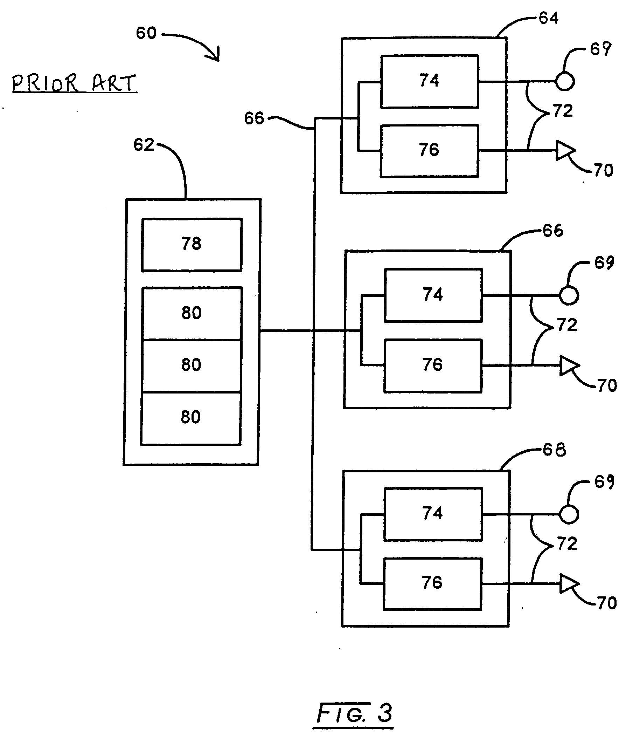

Referring next to Figure 3, a conventional multiplexed electrical system of the prior art having a central control is shown at 60. For purposes of simplicity, the system is shown as having only three nodes as at 64, 66 and 68 although in practice the system would employ more than this number. The system 60 includes a central control 62 in communication with a set of nodes 64 via a serial data communications bus 66. Central control incorporates a network synchronization scheme 78 and programmed algorithms, as at 80, to provide coordination and control of each of the attached nodes 64, 66 and 68. Each node 64, 66 and 68, when given the appropriate instruction by central control 62, can poll the status of sensors as at 69 or switch power to actuators 70 via control wiring 72. Each connected node comprises a sensor interface 74 and an actuator interface 76 in electrical connection with their respective sensors 69 and actuators 70. The central control 62 maintains control over the entire electrical system 60 with a network synchronization 78 module and the functional algorithms 80 that are programmed into the central control 62. The central control 62 must be quite complex to incorporate the function algorithms 80 necessary to operate each of the loads found in the electrical system 60.

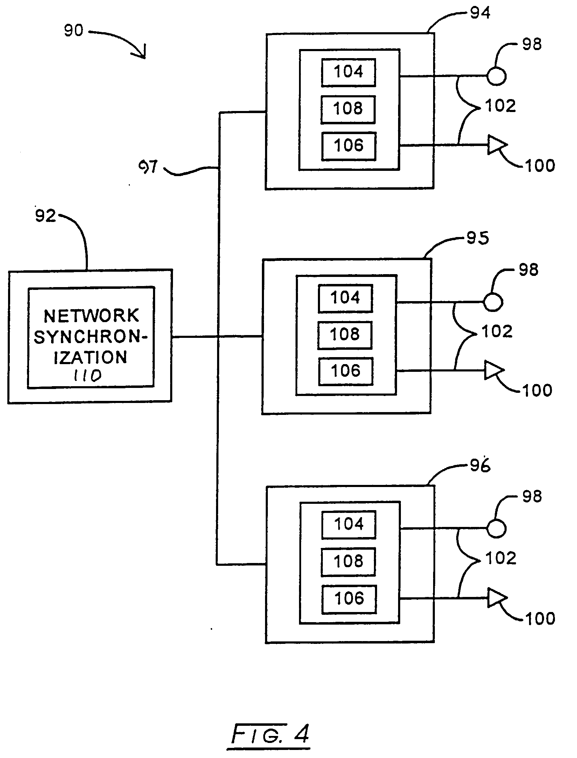

Referring now to Figure 4, an embodiment of the present invention in a multiplexed vehicle electrical system is shown generally at 90. The system 90 includes a central control 92 in communication with intelligent nodes 94, 95 and 96 via a serial data communications bus 96. Central control 92 performs a network synchronizing function with the intelligent nodes 94, 95 and 96 and is commercially available from Vanner Weldon, Inc. as Model VMUX Interface Module. Such intelligent nodes 94, 95 and 96 are also commercially available from Vanner Weldon, Inc. as Model VMUX-nc, Embedded Node Controllers. Each node 94-96 receives information from sensors 98 and switches power to actuators 100 via control wiring 102. Each node 94-96 includes not only a sensor interface 104 and an actuator interface 106 but each is also equipped with an embedded processor 108 which is programmed with the instructions necessary to operate the attached sensors 98 and actuators 100. The central control 92 coordinates the operation of the entire electrical system with network synchronization module 110. This is in contrast to the conventional multiplexed electrical system as shown in Figure 3 where all functional algorithms 80 are programmed into the central control 62 and communicate all commands over data bus 66.

The vehicle multiplexing system 90 of the present invention drastically reduces traffic across the serial data communications bus 97 by eliminating the need for the low level commands from the central control 92 from ever entering the bus. The central control 92 still coordinates operation of the system by issuing high level commands which trigger the operation of the functional algorithms by executing a predetermined set of instructions programmed into the embedded processors 108 found in nodes 94, 95 and 96. These predetermined instruction sets typically include such instructions as necessary to start a procedure, report the status of the procedure and to stop the given procedure. For example, the central control 92 could issue a "start procedure" command which would be received and interpreted by the appropriate node 94. The node 94 would then proceed to perform its function by executing a predetermined set of instructions programmed into the embedded processor 108 of node 94. The node 94 would then execute the function completely autonomously without any further instruction being given by central control 92. If the periodic status of the procedure was desirable, then the central control 92 could periodically issue a "report status of procedure" command to the node 94. In response, the node 94 would transmit a message across the data bus 96 which would indicate the status of the ongoing procedure, e.g., "execution normal", "execution stopped with error", "execution completed", etc. The central control 92 would also issue a "stop procedure" command to the node 94 after a predetermined period or upon instruction by the vehicle's operator. Upon receipt, the appropriate node 94 would cease further operation of the attached load using the appropriate predetermined set of instructions, e.g., "going through complex stop procedure", with which it has been programmed. To facilitate a more complete understanding of the present invention an explanation of the control of a emergency vehicle lighting system in two different modes of operation is given.

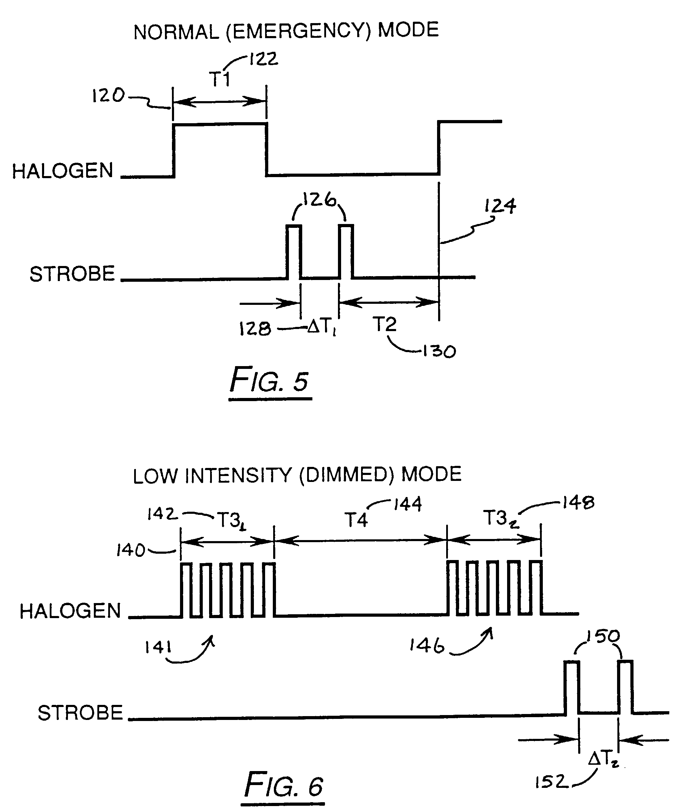

Referring additionally to Figure 5, there is disclosed the control timing diagram for actuating the flashing lights in an emergency vehicle such as an ambulance. In such an application, the intelligent node controller, as at 94, would be programmed with a predetermined set of instructions that may effect the timing of operation of the flashing lights in the Normal (Emergency) Mode. The central control 92 would only need send a single command addressed to the proper intelligent node 94 across bus 97 to instruct the node 94 to begin operation of the flashers in the normal mode. Once node 94 receives and recognizes the "start procedure" command to begin, it would actuate the halogen lamp at time 120 for a period of T1 time 122. The node 94 would then issue two strobe light pulses 126 with a delay between pulses of ÆT₁. Following a delay of T2, the node 94 would then repeat the cycle until instructed to stop. Note that once the "start procedure" command was introduced onto the bus by the central control, the continuing operation of the emergency flashers introduced no additional traffic onto the multiplexed system's 90 data bus. At any time during the operation of the emergency flashers the central control 92 could query the node controller 94 for the status of the operation of the flashers or issue a command to discontinue the flashing operation altogether.

Referring additionally now to Figure 6, the same node 94 may also be programmed to operate a vehicle's emergency flashers in a secondary fashion. In such an application, the intelligent node controller 94 could be programmed with a predetermined set of instrcutions that may effect the timing of operation of the flashing lights in the Low Intensity (Dimmed) Mode. As before, the central control 92 would only need send a single command addressed to the proper intelligent node 94 across bus 97 to instruct the node 94 to begin operation of the flashers in the dimmed mode. Once node 94 receives and recognizes the "start procedure" command to begin, it would actuate the halogen lamp at time 140 for a period of T3₁ time 142 using a signal pulse train 141 having a 50/50 duty cycle. After a delay of time T4, the node 94 would issue a second signal pulse train 146 for a period of T3₂ 148 and having the same duty cycle as before. Following the second pulse train 148, the node 94 then issues two strobe light pulses 150 with a delay between pulses of ÆT₂ 152. As before, the node 94 would then repeat the cycle until instructed to stop. Once again, after the "start procedure" command was introduced onto the bus by the central control, the continuing operation of the emergency flashers in the dimmed mode introduced no additional traffic onto the multiplexed system's 90 data bus. In this manner, the data bus 97 only carries high level commands which control operation of the predetermined set of instructions programmed into the nodes 94, 95 and 96 thus reducing many of the problems associated with heavy command traffic on a multiplexed system's data bus.

Although this invention has been shown and described with respect to detailed embodiments thereof, it will be understood by those skilled in the art that various changes in form and detail thereof may be made without departing from the scope of the claimed invention.

## Claims

1. In an electrical system having a node interconnected with a common data bus for controlling a load, the improvement comprising:
a central controller capable of issuing a function command onto said data bus;
a node controller in communication with said data bus, said node controller capable of being programmed with a predetermined set of instructions and being responsive to said function command issued by said central controller for executing said predetermined set of instructions and generating power conditions at an output of said node controller corresponding to said predetermined set of instructions; and
a load in communication with said output of said node controller and being responsive to said power conditions at said output.

2. The electrical system of claim 1 further comprising a sensor having an output in communication with said node controller, wherein said sensor is capable of issuing a sensor signal, and wherein said node controller is responsive to said sensor signal for executing said predetermined set of instructions and generating power conditions at said output of said node controller corresponding to said predetermined set of instructions.

3. The electrical system of claim 1 wherein said node controller is responsive to said function command of said central controller and is effective for starting and stopping the operation of said load in communication therewith.

4. The electrical system of claim 1 wherein a said node controller is employed as a central controller.

5. In an electrical system having multiple nodes interconnected with a common data bus for controlling loads and monitoring sensor outputs, the improvement comprising:
a central controller capable of issuing function commands onto said data bus and having network synchronizing circuitry for systematically polling said multiple nodes;
a plurality of node controllers in communication with said data bus, each of said node controllers capable of being programmed with a predetermined set of instructions and being responsive to one of said function commands issued by said central controller for executing said predetermined set of instructions and generating power conditions at an output of said node controller corresponding to said predetermined set of instructions; and
a load in communication with said output of one of said node controllers and being responsive to said power conditions at said node controller output.

6. The electrical system of claim 5 wherein said node controllers are responsive to said function commands of said central controller and are effective for starting and stopping the operation of said loads in communication therewith.

7. The electrical system of claim 5 further comprising sensors having outputs in communication with said node controllers and wherein said central controller is further capable of issuing a said function command onto said data bus effective for causing said node controller to place onto said data bus sensor data corresponding to said sensor outputs.

8. The electrical system of claim 5 wherein one of said node controllers is employed as a central controller.
